# DEMANDE DE BREVET EUROPEEN

(11) **EP 1 422 452 A1**
(43) Date de publication de la demande: **26.05.2004**
(21) Numéro de dépôt: 03292618.0
(22) Date de dépôt: 21.10.2003
(51) Int. Cl.: F16K 1/44, F16K 37/00, F15B 15/28, F15B 19/00

(54) **Système de détection de fin de course d'un obturateur d'une vanne fonctionnant selon un mode tout ou rien**

(30) Priorité: 22.11.2002 FR 0214689
(71) Demandeur: DEFONTAINE, 85530 La Bruffière (FR)
(72) Inventeur: Sagot, Benoît, 44190 Gorges (FR)
(74) Mandataire: Pichat, Thierry

(57) **Abrégé**

Le système (5) comprend un repère (6) solidaire de l'obturateur (3) de la vanne (1) et un capteur (7) solidaire du corps (2) adapté à détecter une position du repère (6) en deçà d'un premier seuil (8) correspondant à la position limite de l'obturateur (3) fermant de façon étanche la vanne (1). Selon l'invention, le capteur (7) est adapté à détecter une position du repère (6) au delà du premier seuil (8) et en deçà d'un deuxième seuil (9) correspondant à une position de battements et/ou de décollement de l'obturateur (3). Le système (5) permet ainsi de détecter toute ouverture fugitive ou partielle.

## Description

La présente invention concerne un système de détection de fin de course d'un obturateur d'une vanne fonctionnant selon un mode tout ou rien.

Les vannes utilisées dans l'industrie sont soit des vannes de régulation, soit des vannes fonctionnant selon un mode tout ou rien.

Une vanne de régulation a pour fonction de réguler la circulation d'un fluide dans une conduite, et, de ce fait, elle est associée à un système de contrôle adapté à mesurer le degré d'ouverture de la vanne. Un tel système permet de fournir une information continue sur la position de l'obturateur sur l'ensemble de l'amplitude de mouvement de l'obturateur.

Une vanne fonctionnant selon un mode tout ou rien peut être une vanne d'arrêt (destinée à arrêter la circulation du fluide dans une conduite) ou une vanne d'orientation (destinée à permettre la circulation du fluide dans plusieurs conduites). Dans une telle vanne, l'obturateur est adapté à occuper une position ouverte ou une position fermée dans laquelle il ferme de façon étanche un orifice. Elle est associée à un système de détection de fin de course de l'obturateur de la vanne. Un tel système est adapté à fournir une information binaire relative à la position de l'obturateur.

On connaît un système de détection de fin de course comprenant un repère solidaire d'un des éléments parmi le corps et l'obturateur de la vanne, un capteur solidaire de l'autre élément et adapté à détecter une position du repère en deçà d'un premier seuil correspondant à la position limite de l'obturateur pour laquelle l'orifice est fermé, le système comprenant par ailleurs des moyens de délivrance d'information adaptés à délivrer une information d'orifice fermé lorsque le repère est situé en deçà du premier seuil.

Ce système permet ainsi de fournir une information binaire correspondant aux deux états que peut prendre une vanne fonctionnant selon un mode tout ou rien (orifice ouvert ou orifice fermé).

Cependant, dans une vanne d'arrêt ou d'orientation, pour de multiples raisons (dont la présence d'un élément étranger au niveau du siège, usure anormale de l'obturateur, du siège ou d'un joint...), l'obturateur peut ne pas assurer l'étanchéité requise. L'obturateur est alors dans une position de décollement par rapport au siège ou en position de battement sous l'effet de la différence de pression à laquelle il est soumis.

Un inconvénient majeur du système de l'art antérieur est qu'il ne permet pas de détecter cet état particulier de battement et/ou de décollement.

En effet, un obturateur dans cet état particulier est soit dans la plage de tolérance, et le système transmet un signal correspondant à l'orifice fermé alors qu'il y à une ouverture fugitive ou partielle, soit hors de cette plage, et le système transmet un signal correspondant à l'orifice ouvert, bien que l'ouverture n'est que partielle et que la fermeture ne peut être obtenue par une simple manoeuvre vu que cet état particulier trouve son origine dans une anomalie. Ainsi, l'information sur l'état de battement et/ou de décollement qui correspond à une position anormale de l'obturateur, n'est pas transmise.

La présente invention vise à remédier au problème précité. Plus particulièrement, elle vise à améliorer la connaissance de la qualité de la fermeture de l'orifice de façon à détecter les ouvertures et les fermetures fugitives ou partielles.

Selon l'invention, le capteur est adapté à détecter une position du repère au delà du premier seuil et en deçà d'un deuxième seuil correspondant à une position de battements et/ou de décollement de l'obturateur, et les moyens de délivrance d'information sont adaptés à délivrer une information d'obturateur en position de battements et/ou de décollement lorsque le repère est situé entre le premier seuil et le deuxième seuil, et une information d'orifice ouvert lorsque le repère est situé au delà du deuxième seuil.

Un tel système permet de remédier aux inconvénients précités en fournissant outre l'information sur l'état ouvert ou fermé de l'orifice, celle de la position de battement et/ou de décollement de l'obturateur.

De plus, ce système permet de conserver l'architecture conventionnelle de contrôle et de commande de la vanne fonctionnant selon un mode tout ou rien tout en l'enrichissant d'une information complémentaire qui qualifie la qualité de la fermeture de l'orifice.

D'autres particularités de l'invention résulteront de la description qui va suivre. Aux dessins annexés, donnés à titre d'exemple non limitatif :
- la figure 1 est une vue en coupe schématique d'une vanne d'arrêt à clapet muni d'un système de détection de fin de course selon la présente invention ;
- la figure 2 est une vue schématique illustrant la coopération entre le repère et le capteur d'un système de détection de fin de course selon la présente invention ;
- la figure 3 est une vue en coupe schématique d'une vanne d'orientation à deux obturateurs, chaque obturateur étant en position fermée ;
- la figure 4 est une vue semblable à la figure 3, l'obturateur inférieur étant en position décollée du siège inférieur ;
- la figure 5 est une vue semblable à la figure 3, l'obturateur supérieur étant en position décollée du siège supérieur ;
- la figure 6 est une vue semblable à la figure 3, les deux obturateurs étant en position ouverte ; et
- la figure 7 est une vue correspondant à la figure 1, adaptée à une vanne telle que celle illustrée aux figures 3 à 6.

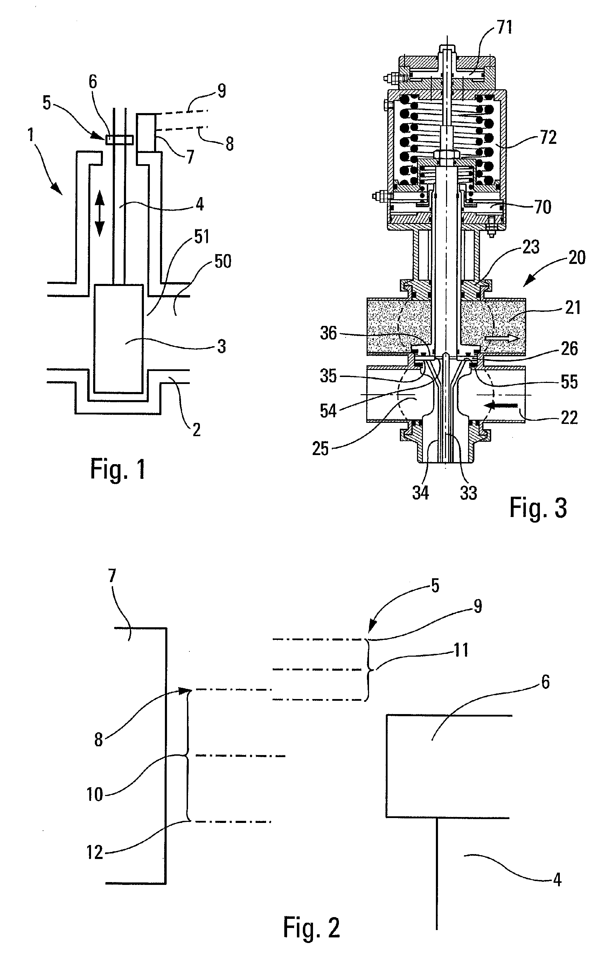

La figure 1 illustre une première application de la présente invention, à savoir une application à une vanne d'arrêt 1 comportant un corps de vanne 2 et un obturateur 3 adapté à occuper une position ouverte ou une position fermée dans laquelle il ferme de façon étanche la conduite 50 dans laquelle circule le fluide. L'obturateur 3 est monté sur une tige 4 coulissante par rapport au corps 2.

Un système de détection 5 de fin de course de l'obturateur 3 est associé à la vanne 1. Le système de détection 5 comprend un repère 6, un capteur 7 et des moyens de délivrance d'information. Dans le présent exemple, le repère 6 est fixé à la tige 4 et le capteur 7 est monté sur le corps 2.

Comme on peut le voir à la figure 2, le capteur 7 est adapté à détecter une position du repère 6 en deçà d'un premier seuil 8 correspondant à la position limite de l'obturateur 3 pour laquelle l'orifice 51, réalisé dans le corps 2 et correspondant au prolongement de la conduite 50, est fermé.

Les moyens de délivrance d'information sont adaptés à délivrer une information d'orifice fermé (c'est à dire de vanne fermée) lorsque le repère 6 est situé en deçà du premier seuil 8.

De plus, le capteur 7 est adapté à détecter une position du repère 6 au delà du premier seuil 8 et en deçà d'un deuxième seuil 9 correspondant à une position de battements et/ou de décollement de l'obturateur 3.

Les moyens de délivrance d'information sont par ailleurs adaptés à délivrer une information d'obturateur 3 en position de décollement et/ou de battement lorsque le repère 6 est entre le premier seuil 8 et le deuxième seuil 9, et une information d'orifice ouvert (c'est à dire de vanne ouverte) lorsque le repère 6 est situé au delà du deuxième seuil 9.

Le deuxième seuil 9 peut correspondre à la limite au-delà de laquelle le capteur 7 ne détecte plus le repère 6.

Selon un premier mode de réalisation de la présente invention, les moyens de délivrance d'information sont adaptés à délivrer une information ternaire, c'est à dire une information indiquant l'un des trois états de la vanne en fonction de la position du repère 6 par rapport aux deux seuils 8,9. L'information délivrée est que, soit la vanne 1 est ouverte (le repère 6, situé au delà du deuxième seuil 9 n'est pas détecté par le capteur 7), soit l'obturateur 3 est en position de battements et/ou de décollement (le repère 6 est entre le premier seuil 8 et le deuxième seuil 9), soit la vanne 1 est fermée (le repère 6 est en deçà du premier seuil 8).

Selon un second mode de réalisation de la présente invention, le repère 6 et le capteur 7 sont agencés de façon à coopérer d'une manière telle que le capteur 7 est adapté à détecter la variation continue de la position du repère 6 et à émettre, vers les moyens de délivrance d'information, un signal continu qui varie en fonction de la position du repère 6 situé en deçà du deuxième seuil 9.

Selon un tel mode de réalisation, les moyens de délivrance d'information sont adaptés à délivrer une information sur la position ponctuelle de l'obturateur 3, c'est à dire une information continue qui dépend de la position du repère 6 quand il est en deçà du deuxième seuil 9 et qui est due à l'interaction continue entre le capteur 7 et le repère 6. Dans, ce cas, moyens de délivrance d'information sont adaptés à délivrer une information indiquant notamment quelle est la position ponctuelle de l'obturateur 3 quand il est en position de battement et/ou de décollement, cette information étant dépendante de la position du repère 6 par rapport au premier seuil 8 et au deuxième seuil 9.

Dans le présent mode de réalisation, le capteur 7 est un capteur magnétorésistif adapté à repérer la position d'un aimant formant repère 6, le capteur 7 est alors sans contact avec le repère 6.

Bien évidemment, le système de détection 5 peut être relié à système de communication en réseau permettant de transmettre l'information donnée par le système 5. Le système peut aussi être relié aux moyens de contrôle de l'actionneur commandant le mouvement de l'obturateur 3.

Les deux seuils 8 et 9 permettent de définir deux plages de tolérance : une première plage 10 correspondant à la plage des position de l'obturateur 3 dans laquelle la vanne 1 est fermée (repère 6 situé entre le premier seuil 8 et une limite inférieure 12 correspondant à la position extrême de fin de course de l'obturateur 3 en position fermée), et une deuxième plage 11 correspondant à la plage des position de l'obturateur 3 dans laquelle il est en position de battements et/ou de décollement (repère 6 situé entre le premier seuil 8 et le deuxième seuil 9).

Les deux seuils 8 et 9 sont enregistrés dans le système lors du calibrage selon lequel une série de positions de l'obturateur 3 (chacun correspondant à un état de la vanne) sont mémorisées. Le calibrage peut se faire en mode semi-automatique (l'opérateur positionne séquentiellement l'obturateur 3 via des commandes manuelles des électrovannes et ordonne au système de mémoriser chaque position) ou en mode automatique (le système positionne séquentiellement l'obturateur 3 via les commandes électriques des électrovannes et mémorise chaque position). La tolérance est fixe ou programmable par interface de communication pour chacune des positions.

Le processus de calibrage peut être réalisé à différentes températures compte tenu des températures auxquelles peut être soumise la vanne 1. Ainsi, le système de détection 5 est alors adapté à donner une information relative à la position de l'obturateur 3 en fonction de la température, ce qui permet de tenir compte des dilatations relatives des composants de la vanne.

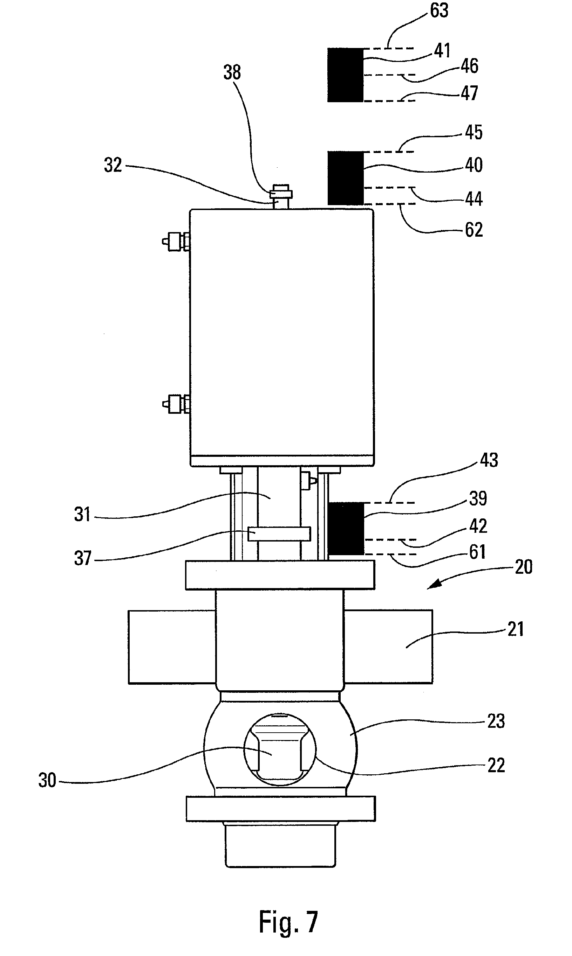

Les figures 3 à 7 illustrent une seconde application de la présente invention, à savoir une application à une vanne 20 d'orientation utilisée pour la connexion de deux conduites 21,22 adjacentes. Une telle vanne 20 est décrite, par exemple, dans la demande de brevet FR 2 777 625.

Une vanne 20 comprend un corps de vanne 23 auquel sont connectées les deux conduites 21,22 (ci-après dénommées conduite supérieure 21 et conduite inférieure 22). Le corps 22 définit une chambre supérieure 24 située dans le prolongement de la conduite supérieure 21, une chambre inférieure 25 située dans le prolongement de la conduite inférieure 22, et une chambre de communication 26 disposée entre la chambre supérieure 24 et la chambre inférieure 25. La chambre de communication 26 est délimitée de la chambre supérieure 24 et de la chambre inférieure 25, respectivement par un siège supérieur 27 et un siège inférieur 28.

Les sièges supérieur 27 et inférieur 28 définissent des orifices 52,53 adaptés à être fermés de façon étanche par un obturateur. A cet effet, la vanne 20 comprend un obturateur supérieur 29 et un obturateur inférieur 30, chaque obturateur étant mobile indépendamment de l'autre selon un axe commun de déplacement qui est normal aux conduites 21,22.

L'obturateur supérieur 29, monté solidaire d'une tige tubulaire 31, est mobile entre une position fermée dans laquelle il ferme de façon étanche l'orifice supérieur 52 défini par le siège supérieur 27, réalisant ainsi l'étanchéité entre la chambre supérieure 24 et la chambre de communication 26, une position de décollement dans laquelle il est disposé dans la chambre supérieure 24, à distance du siège supérieur 28, et une position ouverte dans laquelle il est disposé dans la chambre supérieure 24 au-delà de la position de décollement.

L'obturateur inférieur 30 est mobile entre une position fermée dans laquelle il ferme de façon étanche l'orifice inférieur 53 défini par le siège inférieur 28, réalisant ainsi l'étanchéité entre la chambre inférieure 25 et la chambre de communication 26, une position de décollement dans laquelle il est disposé dans la chambre de communication 26, à distance du siège inférieur 29, et une position ouverte dans laquelle il est disposé dans la chambre supérieure 24 au-delà de la position de décollement. L'obturateur inférieur 30 est monté solidaire d'une tige centrale 32 adaptée à coulisser dans la tige tubulaire 31. Par ailleurs, l'obturateur inférieur 30 est conformé de façon à, quelle que soit sa position, traverser de part et d'autre la chambre inférieure 25 déboucher dans une troisième conduite 58.

Chaque obturateur 29,30 a ainsi trois positions définies : une position fermée, une position de décollement et une position ouverte. Pour réaliser les mouvements de ces deux obturateurs 29,30, la vanne 20 est munie de trois actionneurs agissant chacun selon un mode tout ou rien : un premier actionneur 70 est adapté à entraîner l'obturateur supérieur 29 entre sa position fermée et sa position de décollement, un deuxième actionneur 71 adapté à entraîner l'obturateur inférieur 30 entre sa position fermée et sa position de décollement, et un troisième actionneur 72 adapté à entraîner l'obturateur supérieur 29 et l'obturateur inférieur 30 entre leur position fermée et leur position ouverte.

Deux canaux internes 33,34 traversent l'obturateur inférieur 30 selon la direction de l'axe de déplacement. Les canaux internes 33,34 débouchent à la surface supérieure 35 de l'obturateur inférieur 30 (surface faisant face à l'obturateur supérieur 29) par des orifices internes 54,55. Les canaux internes 33,34 débouchent, par des seconds orifices 56,57 réalisés à l'extrémité inférieure 36 de l'obturateur inférieur 30 (extrémité opposée à la surface supérieure 35), dans la troisième conduite 58. La surface inférieure 36 de l'obturateur supérieur 29 est adaptée à fermer de façon étanche les deux orifices internes 54,55 quand les deux obturateurs 29,30 sont plaqués l'un contre l'autre.

Dans une vanne d'orientation 20, l'obturateur supérieur 29 et l'obturateur inférieur 30 ne sont pas destinés à fermer, respectivement, la conduite supérieure 21 et la conduite inférieure 22, mais à les isoler l'une de l'autre ou à les connecter. De plus, dans la vanne selon le présent exemple, les positions relatives des obturateurs supérieur 29 et inférieur 30 permettent de réaliser, de façon indépendante, des opérations de nettoyage des conduites supérieure 21 et inférieure 22.

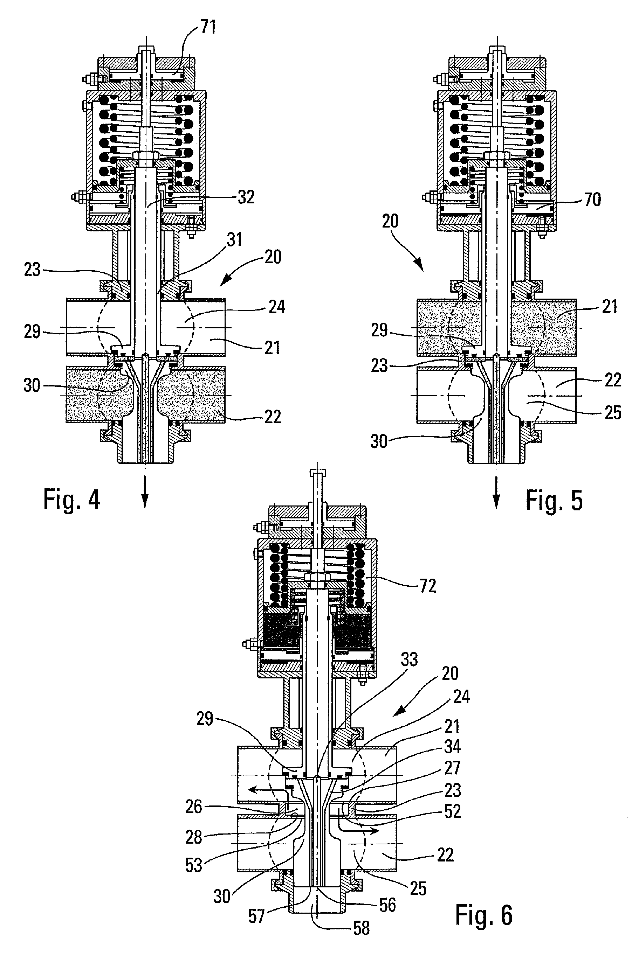

Une telle vanne 20 possède ainsi quatre états de fonctionnement :
- la vanne 20 est fermée : les obturateurs supérieur 29 et inférieur 30 sont en position fermée, les conduites supérieure 21 et inférieure 22 sont isolées l'une de l'autre, et la chambre de communication 26, isolée des deux conduites 21,22, peut être nettoyée par une circulation d'un fluide dans les deux canaux internes 33,34 (figure 3) ;
- la vanne 20 est en position de nettoyage de la chambre inférieure 25 : l'obturateur supérieur 29 est en position fermée, l'obturateur inférieur 30 est en position de décollement, les conduites supérieure 21 et inférieure 22 sont isolées l'une de l'autre, la chambre inférieure 25 peut être nettoyée par la circulation d'un fluide dans les deux canaux internes 33,34 (figure 4) ;
- la vanne 20 est en position de nettoyage de la chambre supérieure 24 : l'obturateur supérieur 29 est en position de décollement, l'obturateur inférieur 30 est en position fermée, les conduites supérieure 21 et inférieure 22 sont isolées l'une de l'autre, la chambre supérieure 24 peut être nettoyée par la circulation d'un fluide dans les deux canaux internes 33,34 (figure 5) ; et
- la vanne 20 est en position ouverte : les obturateurs supérieur 29 et inférieur 30 sont en position ouverte, les conduites supérieure 21 et inférieure 22 sont en communication l'une avec l'autre, et l'obturateur supérieur 29 ferme les deux orifices internes 54,55 empêchant toute fuite vers la troisième conduite 58 (figure 6).

L'importance de la présente invention pour une telle vanne 20 apparaît de suite : il est particulièrement important de détecter, d'une part, tout décollement de l'obturateur supérieur 29 par rapport au siège supérieur 27 et tout décollement de l'obturateur inférieur 30 par rapport au siège inférieur 28 afin de détecter toute fuite de l'une ou l'autre des deux conduites 21,22, et, d'autre part, tout décollement de l'obturateur inférieur 30 par rapport à l'obturateur supérieur 29 afin de détecter toute fuite vers la troisième conduite 58 quand la vanne 20 est ouverte.

Que ce soit pour l'obturateur supérieur 29 comme pour l'obturateur inférieur 30, la position de décollement commandée de l'obturateur est proche de la position fermée, ce qui rend évidemment très intéressante l'utilisation d'un système conforme à la présente invention pour détecter la position des deux obturateurs 29,30.

Dans ce cas, le système de détection 5 est adapté à délivrer une information relative à la position de chacun des obturateurs 29,30, aussi bien par rapport au corps 23 que par rapport à l'autre obturateur 30,29.

Ainsi, un premier repère 37 est monté sur la tige tubulaire 31 et un second repère 38 est monté sur la tige centrale 32.

La position de décollement de l'obturateur supérieur 29 par rapport au siège supérieur 27 est déterminé par l'utilisation d'un premier capteur 39. Le premier capteur 39 est monté sur le corps de la vanne 23 de façon à pouvoir détecter la position du premier repère 37 monté sur la tige tubulaire 31, d'une part, en deçà d'un premier seuil 42 correspondant à la position limite de l'obturateur supérieur 39 pour laquelle l'orifice supérieur 52 est fermé, et d'autre part, au delà du premier seuil 42 et en deçà d'un deuxième seuil 43 correspondant à une position de décollement de l'obturateur supérieur 29.

Quand le premier capteur 39 détecte la position du premier repère 37 entre le premier seuil 42 et le deuxième seuil 43, le système indique que l'obturateur supérieur 29 est en position de décollement. Le système 5, relié aux moyens de contrôle et de commande du premier actionneur 70, est adapté à délivrer une information d'obturateur supérieur 29 en position de décollement commandée (le premier actionneur 70 a été activé afin que la vanne 20 soit position de nettoyage de la chambre supérieure 24) ou une information d'obturateur supérieur 29 en position de décollement anormale correspondant à une ouverture fugitive (le premier actionneur 70 n'a pas été activé afin que la vanne 20 soit position de nettoyage de la chambre supérieure 24).

La position de décollement de l'obturateur inférieur 30 par rapport au siège inférieur 28 est déterminé par l'utilisation d'un second capteur 40. Le second capteur 40 est monté sur le corps de la vanne 23 de façon à pouvoir détecter la position du second repère 38 monté sur la tige centrale 32, d'une part, en deçà d'un premier seuil 44 correspondant à la position limite de l'obturateur inférieur 30 pour laquelle l'orifice inférieur 53 est fermé, et d'autre part, au delà du premier seuil 44 et en deçà d'un deuxième seuil 45 correspondant à une position de décollement de l'obturateur inférieur 30.

Quand le deuxième capteur 40 détecte la position du second repère 38 entre le premier seuil 44 et le deuxième seuil 45, le système indique que l'obturateur inférieur 30 est en position de décollement. Le système 5, relié aux moyens de contrôle et de commande du deuxième actionneur 71, est adapté à délivrer une information d'obturateur inférieur 30 en position de décollement commandée (le deuxième actionneur 71 a été activé afin que la vanne 20 soit position de nettoyage de la chambre inférieure 25) ou une information d'obturateur inférieur 30 en position de décollement anormale correspondant à une ouverture fugitive (le deuxième actionneur 71 n'a pas été activé afin que la vanne 20 soit position de nettoyage de la chambre inférieure 25).

Les premier et seconds capteurs 39,40 peuvent être choisis de sorte qu'ils sont adaptés à détecter la position du repère 37,38 correspondant sur tout l'amplitude du mouvement de l'obturateur 29,30 correspondant entre sa position fermée et sa position de décollement, le deuxième seuil 43,45 de chacun de ces deux capteurs 39,40 étant la limite à partir de laquelle ce dernier ne détecte plus le repère 37,38 correspondant.

L'état de décollement de l'obturateur inférieur 30 par rapport à l'obturateur supérieur 29 est déterminé par l'utilisation d'un troisième capteur 41. Le troisième capteur 41 est monté sur le corps de la vanne 23 de façon à pouvoir détecter la position du second repère 38 monté sur la tige centrale 32, d'une part, en deçà d'un premier seuil 46 correspondant à la position limite de l'obturateur inférieur 30 pour laquelle les orifices internes 54,55 sont fermés, et d'autre part, au delà du premier seuil 46 et en deçà d'un deuxième seuil 47 correspondant à une position de décollement de l'obturateur inférieur 30 par rapport à l'obturateur supérieur 29.

Le troisième capteur 41, bien que ne repérant que la position du second repère 38, c'est à dire la position relative de l'obturateur inférieur 30 par rapport au corps de la vanne 23, par une détermination judicieuse du premier seuil 46, détermine également la position relative de l'obturateur inférieur 30 par rapport à l'obturateur supérieur 29.

En effet, quelles que soient les positions des deux obturateurs 29,30, l'obturateur supérieur 29 est toujours situé au dessus de l'obturateur inférieur 30, et, quand la vanne 20 est en position ouverte, les deux obturateurs 29,30 sont en position ouverte. Le premier seuil 46 correspond donc à la position limite dans laquelle l'obturateur inférieur 30 est dans sa position ouverte et est plaqué (de manière à fermer les deux orifices internes 54,55) contre l'obturateur supérieur 29 qui est lui-même dans sa position ouverte.

Le système 5, relié aux moyens de contrôle-commande des trois actionneurs 70,71,72, est alors adapté à délivrer une information sur l'état complet de la vanne :
- le premier capteur 39 détecte le premier repère 37 en deçà du premier seuil 42 (entre le premier seuil 42 et une limite inférieure 61 au-delà de laquelle le premier repère 37 ne peut aller, l'obturateur supérieur 29 étant en butée contre le siège supérieur 27) : l'obturateur supérieur 29 est en position fermée ;
- le premier capteur 39 détecte le premier repère 37 entre le premier seuil 42 et le deuxième seuil 43 et le premier actionneur 70 n'a pas été activé : l'obturateur supérieur 29 est en position de décollement anormal ;
- le premier capteur 39 détecte le premier repère 37 entre le premier seuil 42 et le deuxième seuil 43 et le premier actionneur 70 a pas été activé : l'obturateur supérieur 29 est en position de décollement commandé ;
- le deuxième capteur 40 détecte le deuxième repère 38 en deçà du premier seuil 44 (entre le premier seuil 44 et une limite inférieure 62 au-delà de laquelle le deuxième repère 38 ne peut aller, l'obturateur inférieur 30 étant en butée contre le siège inférieur 28) : l'obturateur inférieur 30 est en position fermée ;
- le deuxième capteur 40 détecte le deuxième repère 38 entre le premier seuil 44 et le deuxième seuil 45 et le deuxième actionneur 71 n'a pas été activé : l'obturateur inférieur 30 est en position de décollement anormal ;
- le deuxième capteur 40 détecte le deuxième repère 38 entre le premier seuil 44 et le deuxième seuil 45 et le deuxième actionneur 71 a pas été activé : l'obturateur inférieur 30 est en position de décollement commandé ;
- le troisième capteur 41 détecte le deuxième repère 38 en deçà du premier seuil 46 (entre le premier seuil 46 et une limite inférieure 63 au-delà de laquelle le deuxième repère 38 ne peut aller, l'obturateur inférieur 30 étant en butée contre l'obturateur supérieur 29 lui même en butée en position extrême de fin de course en position ouverte) : l'obturateur supérieur 29 est en position ouverte et est plaqué contre l'obturateur inférieur 30 en position ouverte ;
- le troisième capteur 41 détecte le deuxième repère 38 entre le premier seuil 46 et le deuxième seuil 47 : les obturateurs supérieur 29 et inférieur 30 sont en position ouverte, mais ils ne sont pas plaqués l'un contre l'autre.

Bien entendu l'invention n'est pas limitée aux exemples que l'on vient de décrire et on peut apporter à ceux-ci de nombreuses modifications sans sortir du cadre de la présente invention.

Bien évidemment, le capteur 7 pourrait être un capteur à effet Hall adapté à repérer la position d'un aimant permanent ; il pourrait aussi être un capteur inductif...

Bien évidemment, il est possible d'utiliser comme repère un matériau radioactif, le capteur étant alors du type adapté à détecter un tel rayonnement.

De même, le troisième capteur 41 pourrait être monté solidaire de l'obturateur supérieur, un repère supplémentaire étant monté solidaire de l'obturateur inférieur.

Il serait aussi possible d'employer le présent système à une vanne comportant plus de deux obturateurs.

## Revendications

1. Système de détection (5) de fin de course d'un obturateur (3,29,30) d'une vanne fonctionnant selon un mode tout ou rien (1,20) qui comporte un corps (2,23) de vanne et au moins un obturateur (3,29,30) adapté à occuper une position ouverte ou une position fermée dans laquelle il ferme de façon étanche un orifice (51,52,53,54,55), le système de détection (5) comprenant au moins un repère (6,37,38) solidaire d'un des éléments parmi le corps (2,23) et l'obturateur (3,29,30), au moins un capteur (7,39,40,41) solidaire de l'autre élément et adapté à détecter une position du repère (6,37,38) en deçà d'un premier seuil (8,42,44,46) correspondant à la position limite de l'obturateur (3,29,30) pour laquelle l'orifice (51,52,53,54,55) est fermé, et des moyens de délivrance d'information adaptés à délivrer une information d'orifice (51,52,53,54,55) fermé lorsque le repère (6,37,38) est situé en deçà du premier seuil (8,42,44,46), **caractérisé en ce que** le capteur (7,39,40,41) est adapté à détecter une position du repère (6,37,38) au delà du premier seuil (8,42,44,46) et en deçà d'un deuxième seuil (9,43,45,47) correspondant à une position de battements et/ou de décollement de l'obturateur (3,29,30), et **en ce que** les moyens de délivrance d'information sont adaptés à délivrer une information d'obturateur (3,29,30) en position de battements et/ou de décollement lorsque le repère (6,37,38) est situé entre le premier seuil (8,42,44,46) et le deuxième seuil (9,43,45,47), et une information d'orifice (51,52,53,54,55) ouvert lorsque le repère (6,37,38) est situé au delà du deuxième seuil (9,43,45,47).

2. Système (5) selon la revendication 1, **caractérisé en ce que** le repère (6,37,38) et le capteur (7,39,40,41) sont agencés de façon à coopérer, le capteur (7,39,40,41) étant adapté à détecter la variation continue de la position du repère (6,37,38) et à émettre, vers les moyens de délivrance d'information, un signal continu qui varie en fonction de la position du repère (6,37,38) situé en deçà du deuxième seuil (9,43,45,47).

3. Système (5) selon la revendication 1 ou 2, **caractérisé en ce que** les moyens de délivrance d'information sont adaptés à délivrer une information ternaire d'orifice (51,52,53,54,55) ouvert, d'obturateur en position de battements et/ou de décollement, ou d'orifice (51,52,53,54,55) fermé.

4. Système (5) selon la revendication 2, **caractérisé en ce que** les moyens de délivrance d'information sont adaptés à délivrer une information sur la position ponctuelle de l'obturateur (3,29,30) en position de battements et/ou de décollement, en fonction de la position du repère (6,37,38) entre le premier seuil (8,42,44,46) et le deuxième seuil (9,43,45,47).

5. Système (5) selon la revendication 1 à 4, **caractérisé en ce que** le capteur (7,39,40,41) est sans contact avec le repère (6,37,38).

6. Système (5) selon la revendication 5, **caractérisé en ce que** le repère (6,37,38) est un aimant solidaire de l'obturateur (3,29,30).

7. Système (5) selon la revendication 6, **caractérisé en ce que** le capteur (7,39,40,41) est un capteur magnétorésistif solidaire du corps (2,23).

8. Système (5) selon l'une des revendications 1 à 7, **caractérisé en ce qu'**il est relié aux moyens de contrôle et de commande de l'actionneur (70,71,72) adapté à déplacer l'obturateur (3,29,30).

9. Système (5) selon l'une des revendications 1 à 8, la vanne (20) comportant au moins deux obturateurs (29,30) superposés, mobiles par rapport au corps (23) suivant un axe commun de déplacement de façon à permettre la mise en communication d'au moins deux conduites (21,22), un repère (37,38) et un capteur (39,40) étant associés à chaque obturateur (29,30), **caractérisé en ce que** le système (5) est adapté à délivrer, pour chaque obturateur (29,30), une information d'orifice correspondant (52,53) fermé, d'obturateur (29,30) en position de battements et/ou de décollement, et d'orifice correspondant (52,53) ouvert, selon la position du repère correspondant (37,38) par rapport au premier seuil correspondant (42,44) et au deuxième seuil correspondant (43,45).

10. Système (5) selon la revendication 9, un obturateur (30) comportant au moins un orifice interne (54,55) qui est adaptée à être fermé de façon étanche par un autre obturateur (29), **caractérisé en ce que** le système (5) est adapté à délivrer une information d'orifice interne (54,55) fermé, d'obturateurs (29,30) en position de battements et/ou de décollement l'un par rapport à l'autre, et d'orifice interne (54,55) ouvert, selon la position du repère correspondant (38) par rapport au premier seuil correspondant (46) et au deuxième seuil correspondant (47).

11. Système (5) selon la revendication 9 ou 10, **caractérisé en ce que**, pour chaque obturateur (29,30), deux actionneurs (70,72 ;71,72) agissant selon un mode tout ou rien sont adaptés à manoeuvrer l'obturateur correspondant (29,30) entre une position fermée, une position de battement et une position ouverte.

12. Système (5) selon la revendication 11 dépendante de la revendication 8, **caractérisé en ce qu'**il est adapté à délivrer, pour chaque obturateur (29,30), une information d'obturateur en position de décollement anormale dans laquelle l'obturateur (29,30) est en position de décollement alors que l'actionneur (70,71) adapté à entraîner l'obturateur (29,30) en position de décollement n'a pas été commandé, et une information d'obturateur en position de décollement commandée dans laquelle l'obturateur (29,30) est en position de décollement, l'actionneur (70,71) adapté à entraîner l'obturateur (29,30) en position de décollement ayant été activé.
